# EUROPEAN PATENT APPLICATION

(11) **EP 4 282 603 A1**
(43) Date of publication of application: **29.11.2023**
(21) Application number: 23173650.5
(22) Date of filing: 16.05.2023
(51) Int. Cl.: B25J 15/00

(54) **MULTIPLE MOUNTING ROBOTIC TOOL ASSEMBLY**

(30) Priority: 22.05.2022 US 202263344606 P; 03.05.2023 US 202318311309
(71) Applicant: Delaware Capital Formation, Inc., Wilmington, Delaware 19809 (US)
(72) Inventor: GEARY, James W., Pawcatuck, 06379 (US)
(74) Representative: Staeger & Sperling Partnerschaftsgesellschaft mbB

(57) **Abstract**

A multiple mounting robotic tooling assembly (10) includes a base mount (12) for mounting with a robot. The base mount (12) includes a plurality of receptacles (32), each for receiving a tool stem. One or more tool stems (14) each coupled with one of the plurality of receptacles (32) to mount a tool to the base. One or more tool mounts (16) each couples with one of the one or more stems (14). The one or more tool mounts (16) receive a tool for conducting an operation.

## Description

### CROSS-REFERENCE TO RELATED APPLICATION

This application claims the benefit of U.S. Provisional Application No. 63/344,606, filed on May 22, 2022. The entire disclosure of the above application is incorporated herein by reference.

### FIELD

The present disclosure relates to robots and, more particularly, to robotic tooling assemblies with multiple mounting positions.

### BACKGROUND

Robotic tooling generally requires a customized tool mount that requires building time and has a significant cost. Additionally, these designs limit the spatial distance from the robot to the tool to a fixed value. These custom designs are built to connect to a specific tool or multiple tools to a robot or cobot. These types of tools are generally utilized for machine loading and unloading, tool extension and multiple tool arrays.

Machine loading and unloading tool mounts normally mount two tools. One face mounts a tool that holds a blank material. The other face mounts a tool that takes the finish part out of the machine. The robot rotates the tool to place the material blank into the machine to be processed. These tool mounts allow the mounting of only a single tool. Extensions extend the tool away from the robot mount face for various reasons. One such reason is to enable the tool to enter a location that the robot wrist cannot enter for various reasons.

Multiple tool array tool mounts enable more than two tools to be mounted to a robot. This enables the robot to perform multiple, such as three or more, operations. In essence, this makes a single robot capable of doing the work of three robots. The arrays eliminate the need for tool changers and applications where the tool has a dedicated activity. This state of the art design must be machined specifically to match the parameters of the robot mount pattern, the number of tools to be used, and the specific tool that is to mount to each tool mounting face.

Each group has disadvantages. In the machine loading and unloading mounts, the mounting face has slots for screws but no locating feature that matches a robot mounting locating feature. Robots normally have a precise counterbore to position the tool in a lateral location and a dowel pin to restrain the tool ankle. Thus, this type of tool is able to wander over a period of time during use. Additionally, the distance between the robot mount and the tool is fixed and cannot be modified. Also, with few tools having common mountings, the tool plates must be custom made to mount a specific tool.

In this case, the plates are sold as blanks and must be machined to match the specific tool. In the tool extension design, it must be machined specifically to match the parameters of the tool mount pattern, the length of extension and the specific tool that is to be mounted to the tool mount face. Thus, the extension must be a custom design and machined to match these three parameters. Accordingly, this makes each one a unique part. Further, a one off is expensive and time consuming to design and build.

The multiple tool array, like the tool extension design, must be machined specifically to match the parameters of the robot mount pattern, length of extension, and specific tool that is to be mounted to the tool mount face and number of tools. Thus, each device must be a custom design and machined to match the three parameters. This makes each one a unique one off that is expensive and time consuming to design and build.

The present disclosures provides the art with a multiple mount that breaks the robot mount into specific components. The mount provides an extension as well as separate components for the base and tool mount. These components can be mixed to match the requirements of a specific application. Thus, the present disclosure enables component parts to be mass produced. Also, the disclosure enables the component parts to be stocked as kits ready to assemble in a desired configuration for the specific application. Therefore, the present design saves time and money.

### SUMMARY

According to an aspect of the present disclosure, a multiple mounting robot tooling assembly comprises a base mount for mounting with a robot. The base mount includes a plurality of receptacles, each to receive a tool stem. One or more tool stems are provided. The one or more tool stems couple with the receptacles to mount a tool to the base. One or more tool mounts are provided. Each tool mount couples with one of the stems. One or more tool mounts receive a tool to conduct an operation. The receptacles include an anti-rotation mechanism to receive the stems. The stems include a mating, anti-rotation mechanism. The stem may have different lengths. The base includes an anti-rotation constraint to couple with the robot. Each stem end includes a mating anti-rotation mechanism. The tool mounts include a receptacle to receive the stem.

According to a second aspect of the disclosure, a kit for building a multiple robot tooling assembly comprises a base mount for mounting with a robot. The base mount includes a plurality of receptacles, each to receive a tool stem. One or more tool stems are provided. The one or more tool stems couple with the receptacles to mount a tool to the base. One or more tool mounts are provided. Each tool mount couples with one of the stems. The one or more tool mounts receive a tool for conducting an operation. The receptacles include an anti-rotation mechanism to receive the stems. The stems include a mating, anti-rotation mechanism. The stem may have different lengths. The base includes an anti-rotation constraint to couple with the robot. Each stem end includes a mating anti-rotation mechanism. The tool mounts include a receptacle to receive the stems.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.

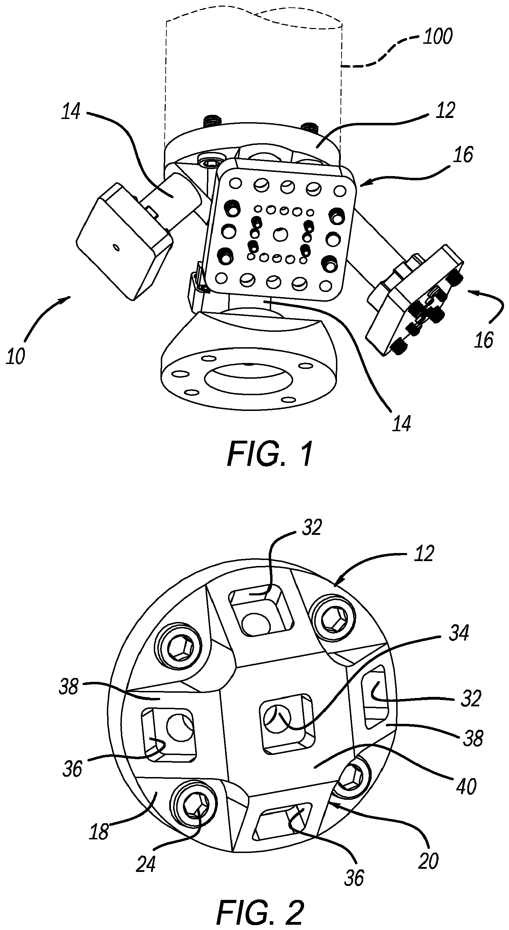

Fig. 1 is a perspective view of a multiple mounting robotic tooling assembly.
Fig. 2 is a perspective view of a front face of a base.

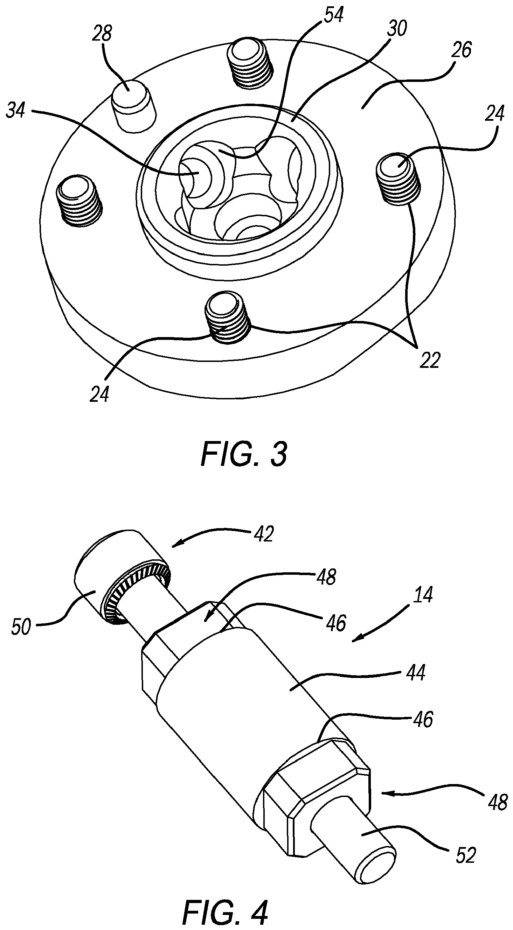

Fig. 3 is a perspective view of a rear view of the base.
Fig. 4 is a perspective view of a stem.

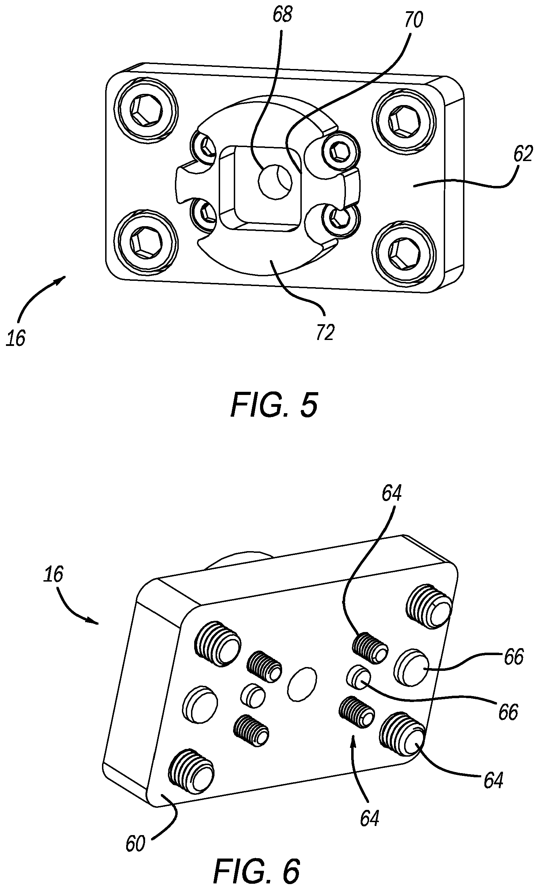

Fig. 5 is a perspective view of the rear of a tool mount.
Fig. 6 is a perspective view of the front face of a tool mount.
Fig. 7 is a partial cross-section view of Fig. 1.

### DETAILED DESCRIPTION

Example embodiments will now be described more fully with reference to the accompanying drawings.

Turning to the figures, a multiple mounting robotic tooling assembly is illustrated and designated with the reference numeral 10. The robotic tooling assembly 10 includes a base mount 12, stems 14 and tool mounts 16. A tool (not shown) is connected with the tool mounts 16.

The base mount 12 can have a desired configuration to couple with a robot arm 100 (shown in phantom). The base mount 12 is illustrated with an overall cylindrical disk shape. The base 12 includes a cylindrical disk portion 18 with an extending crucifix portion 20, however, various configurations could be used, such as triangular, pentagonal, etc. The cylindrical disk portion 18 includes a plurality of apertures 22 to receive fasteners 24 that secure the base mount 12 with the robotic arm 100. The rear surface 26 of the base mount includes an anti-rotation constraint 28. The anti-rotation constraint 28 may be a dowel pin or the like that fits into a socket in the robotic arm 100. Also, a boss 30, defining a bore, is positioned on the rear surface 26 that matches a locating counterbore on the robotic arm 100.

The crucifix portion 20 includes a plurality of receptacles 32. Each receptacle 32 includes a through bore 34 to receive a bolt to secure a respective stem 14. The receptacles 32 include an anti-rotation socket 36. Here the socket 36 is illustrated as rectangular or squared, however, any desired configuration, triangular, hexagonal or the like could be utilized. The crucifix portion 20 includes the receptacles 32 positioned on a tapered face 38. The tapered faces 38 enable the receptacles 32 to be spaced with respect to one another to angle the stems 14 toward different location. A desired angle is used for each tapered face 38 depending on the application. Also, the crucifix portion 20 includes a front face 40 that also includes a receptacle 32. The front face 40 is generally parallel to a face of the cylindrical disk portion 18. Thus, a stem 14 that extends from the front face 40 would be substantially along the axis of the base 12.

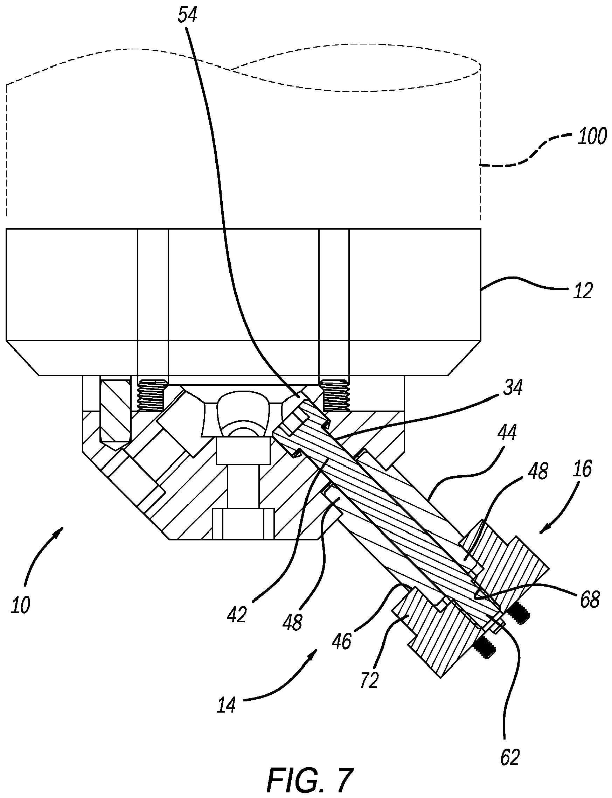

The stems 14 include a bolt 42 passing through a cylinder 44 that forms the stems 14. The cylinder 44 can have varying sizes depending upon the operation required by the tool. The cylinder 44 includes shoulders 46 that are precise and firmly seat the stem in the base mount 12 and tool mount 16. Anti-rotation members 48 are positioned at the ends of the cylinder 44. The anti-rotation members 48 have a configuration to match the receptacle socket 36 in the base mount 12. Here, they are illustrated with an overall rectangular or square configuration with truncated corners. The anti-rotation members 48 on each end keys into the base mount 12 and tool mounts 16 to precisely orientate the tool while providing stiffness in the connection against bending from torsion loads of the tool. This also enables the tool to be connected in one of the various orientations. However, the anti-rotation member pattern could have more than four orientations based on the pattern. The bolt 42 includes a head 50 with a socket to receive a fastening tool. The other bolt end 52 is threaded to be received within the thread bore of the tool mount 16. Thus, the head is fit within the bore 34 in a recess portion 54 of the bore 34 in the base mount 12 as seen in Fig. 7.

The tool mount 16 includes a front face 60 and a rear face 62. The front face 60 includes a mounting pattern with screws 64 and dowel pins 66 to locate a matching tool (not shown). Thus, the pattern enables various types of tools to be connected with the tool mount 16. The rear face 62 of the tool mount includes a threaded bore 68 to receive the threaded bolt 42 from the stem 14. Additionally, the tool mount 16 includes an anti-rotation socket 70 with a cutout, here illustrated as a rectangular or square cutout, to receive the anti-rotation member 48 of the stem 14. Thus, the tool mounts 16 are rigidly secured with the stems 14. Additionally, a cylindrical boss 72 projects from the rear face 62. The boss 72 enables the shoulders 46 of the stem to rest or seat upon the boss 72.

Thus, the tool mounts 16, by having the mounting pattern, enables multiple tools to be secured to the tool mount plate 16 without customization. Additionally, various types of tool mount plates 16 can be utilized to receive tools. The tool mount plates 16 can be blank for customization or may include patterns to mount tools that normally connect directly to the robot or include a design for popular tools.

To mount the components together, the bolt 42 is passed through the bore 34 in the base mount 12. The cylinder 44 and anti-rotation members 48, on each side of the cylinder, are positioned onto the bolt 42. One anti-rotation member 48 mates with the anti-rotation socket 36 of the base mount 12. The tool mount 16 is positioned onto the threaded fastener or bolt 42. The bolt 42 is rotated until the other anti-rotation member 48 seats in the socket 70 to secure the tool mount 16 with the stem as illustrated in Fig. 7. This is continued to connect the numerous stems 14 and tool mount plates 16 with the base receptacles 32 as desired.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A multiple mounting robotic tooling assembly comprising:
a base mount for mounting with a robot, the base mount including a plurality of receptacles, each for receiving a tool stem;
one or more tool stems, the one or more tool stems each coupling with one of the plurality of receptacles for mounting a tool to the base;
one or more tool mounts, each tool mount couples with one of the one or more stems, the one or more tool mounts receive a tool for conducting an operation.

2. The multiple mounting robotic tooling assembly of Claim 1, wherein the receptacles include an anti-rotation mechanism for receiving the stem.

3. The multiple mounting robotic tooling assembly of Claim 1, wherein the stems have different lengths.

4. The multiple mounting robotic tooling assembly of Claim 2, wherein the stems include a mating anti-rotation member.

5. The multiple mounting robotic tooling assembly of Claim 1, wherein the base mount includes an anti-rotation constraint for coupling with the robot.

6. The multiple mounting robotic tooling assembly of Claim 4, wherein each stem end includes a mating anti-rotation member.

7. The multiple mounting robotic tooling assembly of Claim 1, wherein the tool mounts include an anti-rotation receptacle for receiving the stems.

8. A kit for building a multiple mounting robotic tooling assembly comprising:
a base mount for mounting with a robot, the base mount including a plurality of receptacles, each for receiving a tool stem;
one or more tool stems, the one or more tool stems each coupling with one of the plurality of receptacles for mounting a tool to the base;
one or more tool mounts, each tool mount couples with one of the one or more stems, the one or more tool mounts receive a tool for conducting an operation.

9. The kit for building a multiple mounting robotic tooling assembly of Claim 8, wherein the receptacles include an anti-rotation mechanism for receiving the stem.

10. The kit for building a multiple mounting robotic tooling assembly of Claim 8, wherein the stems have different lengths.

11. The kit for building a multiple mounting robotic tooling assembly of Claim 9, wherein the stems include a mating anti-rotation member.

12. The kit for building a multiple mounting robotic tooling assembly of Claim 8, wherein the base mount includes an anti-rotation constraint for coupling with a robot.

13. The kit for building a multiple mounting robotic tooling assembly of Claim 11, wherein each stem end includes a mating anti-rotation member.

14. The kit for building a multiple mounting robotic tooling assembly of Claim 8, wherein the tool mounts include an anti-rotation receptacle for receiving the stems.
